# EUROPEAN PATENT SPECIFICATION

(11) **EP 2 314 172 B1**
(45) Date of publication and mention of the grant of the patent: **26.11.2014**
(21) Application number: 10786228.6
(22) Date of filing: 10.06.2010
(51) Int. Cl.: A23K 1/16, A23K 1/18

(54) **LIVESTOCK FEED ADDITIVE AND LIVESTOCK FEED COMPOSITION**
VIEHFUTTERZUSATZ UND VIEHFUTTERZUSAMMENSETZUNG
ADDITIF D'ALIMENTS POUR BÉTAIL ET COMPOSITION D'ALIMENTS POUR BÉTAIL

(30) Priority: 12.06.2009 JP 2009141105
(43) Date of publication of application: 27.04.2011
(73) Proprietor: Ajinomoto Co., Inc., Tokyo 104-8315 (JP)
(72) Inventor: MIURA, Makoto, Kanagawa, 210-8681 (JP); NAKAGAWA, Kazuki, Tokyo 104-8315 (JP); TAKEUCHI, Shigeyuki, Tokyo 104-8315 (JP); WATANABE, Kazumasa, Tokyo 104-8315 (JP)
(74) Representative: Strehl Schübel-Hopf & Partner
(86) International application number: PCT/JP2010/059878
(87) International publication number: WO 2010/143697

(56) References cited:
- WO-A2-01/89315
- CA-A1- 2 099 529
- JP-A- 6 303 918
- JP-A- 9 023 825
- JP-A- 58 201 951
- JP-A- 61 212 249
- JP-A- 62 296 826
- JP-A- 2002 045 122
- JP-T- 2003 534 019
- US-A- 3 256 095
- US-A- 3 362 828
- US-A- 4 738 852

## Description

### Technical Field

This invention relates to a feed additive for livestock and a feed composition for livestock to improve feed intake, feed conversion ratio and body weight gain of livestock.

### Background Art

Livestock such as pigs belonging to mammals are bred together with their dams by suckling for a certain period of time after their birth, but thereafter, the rearing method is changed to giving solid feed via the weaning period. In this period, feed intake is sometimes reduced due to the stress caused by an environmental change after weaning and a change of the feed type. In addition, it is known that dyspeptic and infectious diarrhea or the infection itself cause reducing of feed intake of livestock and become a factor of growth retardation.

On the other hand, L-tryptophan is one of amino acids which constitute body proteins and regarded as an essential amino acid (indispensable amino acid), which means that it is necessary for animals to ingest it as food because it cannot be synthesized in the animal body. Since L-tryptophan is a limiting amino acid following to L-lysine and L-threonine, a general feed formulation for livestock is designed to fully satisfy L-tryptophan requirement of livestock, by formulating L-tryptophan in order to accelerate the growth of livestock. This means, on the contrary, that when supply of L-tryptophan from feed is limited, protein synthesis is stagnated and then growth is retarded. Actually, it is known that an aqueous solution of tryptophan obtained from a culture of a microorganism having the ability to produce L-tryptophan is used as a composition for feed (Patent Literature 1). In this way, L-tryptophan is deeply related to the muscle protein synthesis. On the other hand, L-tryptophan is also involved in physiological functions. One of them is its concern in the regulatory function of feed intake. L-tryptophan is a precursor of serotonin and melatonin which play a main role of controlling ingestion (Non-patent Literatures 1 and 2). Serotonin controls appetite and ingestion behavior mainly in the central system and melatonin controls them mainly in the peripheral system. In addition, according to the recent studies, it has been shown that L-tryptophan level in feed can influence on the blood concentration of ghrelin, which is a hormone involving in the intake of nutrients and on the gene expression levels in gastric fundus and the duodenum (Non-Patent Literature 3).

As just described, it is clear that L-tryptophan is essential as one of the substrates for protein synthesis in the body and also L-tryptophan itself is greatly related to appetite regulation.

Also, monosodium L-glutamate is a substance which improves palatability and is used widely and industrially as an umami compound. Thus, it becomes widely available in the field of feed (Patent Literature 2). Monosodium L-glutamate is dissociated into L-glutamic acid and sodium when it is ingested, and it has been found from the mice studies that there are specific receptors for L-glutamic acid (Non-patent Literature 4). And also it has been found from the rat studies that gastric function will be enhanced by stimulating an umami-responding neuron when L-glutamic acid binds to the receptor presenting in the oral cavity (Non-patent Literature 5).

Furthermore, the L-glutamate receptor was also found in the rat stomach (Non-patent Literature 6) and a possibility has been shown that signaling of information on digestion is delivered to the brain via vagus nerve (Non-patent Literature 5). It has been considered that this information delivered to the brain is related to the acceleration of gastric emptying in human, namely, improvement of discomfort in stomach (Non-patent Literature 7) and to the improvement of digestive functions, for example an enhancement of gastric juice secretion, in dog and human (Non-patent Literatures 8 and 9).

In addition, a feed composition for cattle containing a) L-tryptophan, b) a sugar and c) a glycogenic amino acid or its salt at the ratio of a : b : c = 1 ∼ 10 : 1 ∼ 10 : 1 ∼ 10 (weight ratio) has been disclosed as a feed composition and a method which effectively improve the nutritional conditions during unstable periods of beef , dairy and breeding cattle. Additionally, glutamic acid is exemplified as a glycogenic amino acid (Patent Literature 3).

CA 2,099,529 A1 and WO 01/89315A2 disclose nutritional supplements comprising tryptophan, lysine and glutamic acid or glutamate.

US 3,256,095 discloses a synthetic diet comprising L-lysine, tryptophan and L-glutamic acid.

### Citation List

Patent Literature:
Patent Literature 1: JP-A-61-212249
Patent Literature 2: JP-A-2002-45122
Patent Literature 3: JP-A-2-273145

### Non Patent Literature:

Non-patent Literature 1: Animal Feed Science and Technology, 132; 49-65 (2007)
Non-patent Literature 2: Journal of Pineal Research, 21; 251-256 (1996)
Non-patent Literature 3: Domestic Animal Endocrinology, 33; 47-61 (2007)
Non-patent Literature 4: Nature Neuroscience, 3 (2); 113-119 (2000)
Non-patent Literature 5: Asia Pacific Journal of Clinical Nutrition, 17 (S1); 372-375 (2008)
Non-patent Literature 6: FEBS Letters, 581; 1119-1123 (2007)
Non-patent Literature 7: Gastroenterology, 130 (Supple 2); A246 (2006)
Non-patent Literature 8: Voprosy Pitaniia, 3; 29-33 (1993)
Non-patent Literature 9: Voprosy Pitaniia, 5 and 6; 19-22 (1992)

### Summary of Invention

### Technical Problem

Although it is known that L-tryptophan is used by addition to feed and body weight gain efficiency of livestock is increased to a certain degree by adding L-tryptophan as described above, there is a limitation in increasing body weight of livestock because excessive addition of L-tryptophan can not make dose-dependent effects of increasing body weight. According to the feed composition for cattle described in Patent Literature 3, it is expected that nutritional conditions of beef cattle during unstable periods will be improved by using L-tryptophan and a glycogenic amino acid and that retardation of body weight gain will be also improved. However, only glycine and alanine were administered to cattle as the glycogenic amino acid, and an example of a combination of L-tryptophan and glutamic acid has not been reported and therefore its effect is not clear.

Accordingly, an object of the invention is to provide an additive for livestock feed and a feed composition for livestock in order to improve feed conversion ratio and body weight gain efficiency by further increasing feed intake of livestock.

### Solution to Problem

The present inventors have conducted various examinations and found as a result that feed conversion ratio and body weight gain efficiency are improved when the livestock feed which contains L-tryptophan and monosodium L-glutamate at a specific mass ratio is provided. Thus this invention has been accomplished.

That is, the invention includes the following embodiments of (1) to (12).
(1) A feed additive for livestock, which comprises monosodium L-glutamate and L-tryptophan, wherein a mass ratio of free monosodium L-glutamate (provided that all converted into monosodium L-glutamate monohydrate) and free L-tryptophan (GLU/TRP ratio) is from 0.5 to 30.
(2) The feed additive for livestock described in the above-mentioned (1), wherein the GLU/TRP ratio is from 1.0 to 12.
(3) The feed additive for livestock described in any one of the above-mentioned (1) or (2), wherein the livestock is a non-ruminant animal.
(4) The feed additive for livestock described in the above-mentioned (3), wherein the non-ruminant animal is a pig.
(5) A feed composition for livestock, which comprise L-tryptophan, monosodium L-glutamate and L-lysine, wherein a mass ratio of free monosodium L-glutamate (provided that all converted into monosodium L-glutamate monohydrate) and free L-tryptophan (GLU/TRP ratio) is from 0.5 to 30, and a mass ratio of total L-tryptophan/L-lysine is larger than 0.15.
(6) The feed composition for livestock described in the above-mentioned (5), wherein the GLU/TRP ratio is from 1.0 to 12.
(7) The feed composition for livestock described in any one of the above-mentioned (5) or (6), wherein the livestock is a non-ruminant animal.
(8) The feed composition for livestock described in the above-mentioned (7), wherein the non-ruminant is a pig.
(9) A method for producing a feed composition for livestock, which comprises a GLU/TRP ratio to be from 0.5 to 30 and a mass ratio of total L-tryptophan/L-lysine to be larger than 0.15, in the feed composition for livestock.
(10) The method for producing a feed composition for livestock described in the above-mentioned (9), wherein the feed additive for livestock described in any one of the above-mentioned (1) to (4) is added to a feed material.
(11) The method for feeding a livestock with the feed additive for livestock described in any one of the above-mentioned (1) to (4) or the feed composition for livestock feed described in any one of the above-mentioned (5) to (8).
(12) The method according to (11), wherein the feeding is carried out for improving feed conversion ratio and body weight gain efficiency of livestock.

The feed additive for livestock described in any one of the above-mentioned (1) to (4) can be used for producing a feed composition for livestock in order to improve feed conversion ratio and body weight gain efficiency of livestock. In addition, the feed additive for livestock described in any one of the above-mentioned (1) to (4) or the feed composition for livestock feed described in any one of the above-mentioned (5) to (8) can be used for improving feed conversion ratio and body weight gain efficiency of livestock.

### Effects of Invention

According to the invention, feed conversion ratio and body weight gain efficiency of livestock can be improved by feeding the feed additive for livestock and the feed composition for livestock, by synergistic effects of both increasing ingestion by L-tryptophan and improvement of palatability and digestion function by monosodium L-glutamate. As the result, effects such as improvement of productivity of livestock and economic efficiency can be obtained.

### Description of Embodiments

Hereinafter, substances concerned with the invention are described. Also, the feed additive for livestock and feed composition for livestock, a method for making the feed composition for livestock, a feeding method of the feed composition to livestock and a method for increasing body weight gain of livestock are described in detail.

The livestock in the invention, however, means an industrial animal for milk, meat or leather, and cattle, pig, chicken, horse, turkey, sheep and goat are cited as an example of livestock.

Hereinafter, amino acids used in the invention are described.

According to the invention, free amino acids mean amino acids which are present as free-form and do not include amino acids constituting proteins. Total amino acids mean those which contain both of free and protein-constituting amino acids. Monosodium L-glutamate in the feed additive for livestock and the feed composition for livestock specified in the invention is free monosodium L-glutamate, and L-lysine means total L-lysine. In addition, L-tryptophan in the feed additive for livestock and the feed composition for livestock specified in the invention is free or total L-tryptophan.

The amino acid used in the invention may be either a hydrate or anhydride form.

The GLU/TRP ratio used in the invention is a mass ratio of free monosodium L-glutamate (provided that all converted into monosodium L-glutamate monohydrate) and free L-tryptophan.

For example, Table 1 shows specific examples of anhydrides or hydrates of monosodium L-glutamate and L-glutamic acid which are converted into monosodium L-glutamate monohydrate.

**[Table 1]**

| Item | Description in examples | Converted mass ratio | Molecular weight |
|---|---|---|---|
| Monosodium L-glutamate monohydrate (%) | Monosodium L-glutamate | 1.0 | 187.13 |
| Monosodium L-glutamate anhydride (%) | - | 0.90 | 169.11 |
| L-glutamic acid monohydrate (%) | - | 0.88 | 165.14 |
| L-glutamic acid anhydride (%) | L-glutamic acid | 0.79 | 147.13 |

The L-amino acids specified in the invention may be its salts. L-lysine hydrochloride, L-lysine L-glutamate and L-lysine L-aspartate are cited as an example. The mass of the L-lysine salt can be converted to be equimolar to L-lysine.

Also, the amino acids specified in the invention are preferably L-isomer from the viewpoint of utilization efficiency, but D-isomer can also be used.

The monosodium L-glutamate, L-tryptophan and L-lysine are produced by a synthesis method, an extraction method or a fermentation method can be used, but the origin is not particularly limited.

Hereinafter, the measuring methods are described for the free amino acids, the amino acids constituting proteins and the total amino acid in the invention.

Regarding the free amino acids, pure water is added to the feed additive for livestock, the concentration of amino acids in the aqueous solution is measured by an amino acid analyzer using ninhydrin reaction (e.g., the L-8800 type or L-8900 type high speed amino acid analyzer manufactured by Hitachi High-Technologies Corporation, physiological fluid analysis), and amounts of amino acids contained can be calculated from the results of the measurement. The total amino acid can be determined by using an amino acid analyzer (e.g., the amino acid analyzer JLC-500/V, manufactured by JEOL, the standard method) in the same manner as the above free amino acid measuring method, after acidic hydrolysis of proteins. The amino acids constituting proteins can be calculated by subtracting the measured value of free amino acids from the measured value of the total amino acids. The glutamic acid detected by this measurement is calculated by converting it into monosodium glutamate. In addition, the measurement of amino acids can be carried out by liquid chromatography, gas chromatography and mass spectrometry alone or in combination therewith.

Hereinafter, the feed additive for livestock of the invention (also simply referred to as "additive for feed" hereinafter) is described.

The additive for feed contains monosodium L-glutamate and L-tryptophan at a specific ratio in the composition.

The GLU/TRP ratio in the additive for feed is from 0.5 to 30, preferably from 0.5 to 20, more preferably from 0.5 to 15, still more preferably from 0.5 to 14, further preferably from 1.0 to 12, further more preferably from 1.0 to 11, still further more preferably from 1.0 to 10, particularly preferably from 5.0 to 10, and most preferably from 7.0 to 10. The effect of the invention is preferably shown when the GLU/TRP ratio in the additive for feed is 0.5 or more, and the cost of the additive for feed can be cut down when the GLU/TRP ratio is 30 or less.

Hereinafter, the feed composition for livestock of the invention (also simply referred to as "feed composition" hereinafter) is described.

The feed composition of the invention is a composition to which the above additive for feed is added.

The feed composition is one which comprises L-tryptophan, monosodium L-glutamate and L-lysine, wherein the GLU/TRP ratio is within the range of from 0.5 to 30 and the mass ratio of total L-tryptophan/L-lysine is larger than 0.15.

The GLU/TRP ratio in the feed composition is from 0.5 to 30, preferably from 0.5 to 20, more preferably from 0.5 to 15, still more preferably from 0.5 to 14, further preferably from 1.0 to 12, further more preferably from 1.0 to 11, still further more preferably from 1.0 to 10, particularly preferably from 5.0 to 10, and most preferably from 7.0 to 10. The effect of the invention is preferably shown when the GLU/TRP ratio in the feed composition is 0.5 or more, and the cost of the feed composition can be cut down when the GLU/TRP ratio is 30 or less.

Also, the measuring methods of the free amino acids, the amino acids constituting proteins and the total amino acids are similar to the methods for the above additive for feed.

The L-lysine, which is an essential amino acid like L-tryptophan, is provided from feed and contained in general feed materials. In a practical feed, L-lysine is tended to be an amino acid which restricts availabilities of the other essential amino acids. Therefore L-lysine is also called as the first limiting amino acid, and requirements of essential amino acids for livestock are sometimes shown as an ideal amino acid profile using L-lysine as a reference. The mass ratio of total L-tryptophan/L-lysine in the feed composition is adjusted to be larger than 0.15 which is larger than the ratio considered to be nutritionally optimum for livestock. That is, the total L-tryptophan/L-lysine in the feed composition can be adjusted to be larger than the mass ratio calculated from the recommended amounts in the general air-dried feed, based on the ideal profile of essential amino acids. It is considered that the mass ratio of total L-tryptophan/L-lysine in the feed composition is, for example, 0.19 or more for piglets and growing and finishing pigs, 0.16 or more for pregnant sows and 0.19 or more for lactating sows (Japanese Feeding Standard for Swine (2005), Japan Livestock Industry Association, p. 113); in the case of poultry (Japanese Feeding Standard for Poultry (2004), Japan Livestock Industry Association, p. 14-15), it is 0.20 or more at the growing period of egg-type chickens, 0.26 or more at the laying period of egg-type chickens, and 0.18 or more for broilers. And it is 0.21 or more and 0.23 or more for Japanese quail and ducks, respectively (Japanese Feeding Standard for Poultry (2004), Japan Livestock Industry Association, p. 18-19). When L-lysine and L-tryptophan are contained in the feed composition in the amounts to make the ratio larger than considered to be nutritionally optimum for each livestock species, proteins are efficiently synthesized because the demand of L-lysine in the livestock is satisfied, and at the same time, feed conversion ratio and body weight gain efficiency can be improved through the increasing of feed intake of the livestock due to acceleration of ingestion by the function of L-tryptophan. However, it is known that, when the mass ratio becomes higher, it will be hard to obtain the dose-dependent improvement of feed conversion ratio and body weight gain efficiency which are expected by the additional amount of L-tryptophan. The invention improves the feed conversion ratio and body weight gain efficiency in the range of the additional amount of L-tryptophan where this dose-dependent improvement cannot be obtained.

The mass ratio of total L-tryptophan/L-lysine is larger than 0.15, preferably larger than 0.19, more preferably larger than 0.20, still more preferably larger than 0.21, particularly preferably larger than 0.22, and most preferably larger than 0.24.

Also, the additive for feed of the invention can be provided as the feed composition of the invention, by the combination with a general feed. So long as the general feed does not impair the effect of the invention, it is not particularly limited and includes mother's milk, a milk replacer, a pre-initial stage feed (a pre-starter feed), an initial stage feed (a starter feed) and a growing and finishing stage feed.

The feed composition of the invention can be used by mixing with at least one of the "feed materials" defined below, so long as it does not have influences upon the effect of the invention. The "feed materials" according to the invention include, for example, brans, such as wheat bran, rice bran, barley bran, and millet bran; food processing byproducts, such as soybean-curd residue, starch pulp, copra meal, *sake* cake, soy sauce cake, brewer's grains, sweet potato distiller's residue, and juice pulp of fruits and vegetables; cereals, such as corn, rice, wheat, barley, and oat; oil seed meals, such as soybean meal, rapeseed meal, cotton seed meal, linseed meal, sesame meal, and sunflower meal; animal origin feeds, such as fish meal, casein, dried skim milk, dried whey, meat and bone meal, meat meal, feather meal, and blood meal; and leaf meals, such as alfalfa meal.

A filler, an extender, a nutrition reinforcing agent and/or a feed additive can also be blended in the aforementioned additive for feed and feed composition, so long as they do not impair the effect of the invention. As the filler, for example, cellulose derivatives such as carboxymethylcellulose can be mentioned; as the extender, for example, dextrin and starch can be mentioned; as the nutrition reinforcing agent, for example, vitamins and minerals can be mentioned; and as the feed additive, for example, enzyme preparations and probiotics can be mentioned.

The additive for feed of the invention can be given alone to livestock, but can also be given by adding it to and mixing it with a general feed. In the case of raising a pig, for example, only mother's milk is provided just after birth, but 1 to 2 weeks thereafter, a pre-initial stage feed (pre-starter feed) is provided together with the mother's milk. This is changed to an initial stage feed (starter feed) as the weaning starts, and fattening is carried out thereafter using a growing and finishing stage feed. In addition, in the case of ruminants such as cattle, sheep and goat, mother's milk or a milk replacer is provided together with a solid feed until the rumen is formed and then completely changed to a solid feed simultaneously with the weaning. The additive for feed of the invention can improve feed conversion ratio and body weight gain efficiency when added to any of these feeds.

Also, the additive for feed and the feed composition of the invention can be given to general livestock but can exert superior effect on non-ruminants. For example, excellent effect to improve feed conversion ratio and body weight gain can be obtained for non-ruminants, such as pig, chicken, horse, rabbit, duck, turkey, Japanese quail and ostrich, and the effect can be fully obtained particularly for pig.

Also, according to the invention, the method for adding to the additive for feed and the feed composition is not particularly limited, so long as the GLU/TRP ratio in the feed composition is within the aforementioned range and the mass ratio of total L-tryptophan/L-lysine is larger than the aforementioned mass ratio, and for example, they can be added under a powder state, a solid state and a liquid state.

The feed composition prepared in this manner can be given to livestock by a general feeding method. In addition, the livestock provided with the feed composition can efficiently accelerate body weight gain. It is considered that this is based on the acceleration of the ingestion by L-tryptophan and the further increase of feed intake by the improvement of palatability and digestive functions by monosodium L-glutamate or L-glutamic acid. Also, as the general fattening method, a feed which is sufficiently satisfying nutritional requirements for each kind and growth stage of livestock may be continuously provided.

The method for increasing body weight gain of livestock is a method which improves feed conversion ratio and body weight gin efficiency of livestock when the feed composition of the invention is given to livestock without restricting the period, or a method which improves feed conversion ratio and body weight gain efficiency of livestock when the feed composition of the invention is given to livestock within a certain period.

Thus, the method for improving feed conversion ratio and body weight gain efficiency obtained by providing livestock with the additive for feed and the feed composition of the invention is industrially useful for applying to livestock under stressful environments such as after changing to a different feed at weaning period or in housing under high stocking density conditions.

The invention is specifically described based on examples, but the invention is not limited to the examples. Also, unless otherwise indicated, the term "%" means "% by weight".

In addition, monosodium L-glutamate monohydrate is used as monosodium L-glutamate in the examples, and L-glutamic acid anhydride is used as the L-glutamic acid, but as described above, each of their anhydride or hydrate can also be used at an equimolar level.

### Examples

### [Example 1]

Examination was made on the effect of total L-tryptophan in feed from deficient to sufficient and further adding monosodium L-glutamate to the feed in which total L-tryptophan was sufficient to the requirement. A total of 216 weaned and castrated male piglets (Landrace × Large White × Duroc, crossbred) were randomly allocated to six treatments with six replications using six piglets in each pen as an experimental unit in a complete block design. Comparative feed 1 to 4 (Comparative Examples) and inventive feed 1 and 2 (Examples) containing the amino acids shown in Table 2 were given to each treatment group.

Comparative Example 1 was formulated as shown in Table 3 and contained 1.29 % of L-lysine without the addition of monosodium L-glutamate. For Comparative Example 2 to 4 and Example 1 and 2, Comparative Example 1 was used as the basal composition and each amino acid was added by substitution for corn starch shown in Table 3. In Example 1 and 2, formulations were designed in such a manner that adding amounts of monosodium L-glutamate became 5 and 10 times of the L-tryptophan added to Comparative Example 4, respectively. In Comparative Example 1 and 2, only L-tryptophan was added, so that the mass ratio of total L-tryptophan/L-lysine was lower than the ratio considered to be nutritionally optimum for piglets (0.19), while it was higher than the optimum ratio in Comparative Example 3 and 4 and Example 1 and 2.

Weaning piglets were fed these diets *ad libitum* for 28 days. By measuring body weight and the residual feed at the start and 28 days after the administration, feed intake, body weight gain (increased amount of body weight) and feed conversion ratio were calculated. The results are shown in Table 4.

[Table 2]

**Table 2: Added amount of amino acid in test feed**

| Amino acids | Comp. Ex. 1 | Comp. Ex. 2 | Comp. Ex. 3 | Comp. Ex. 4 | Example 1 | Example 2 |
|---|---|---|---|---|---|---|
| L-tryptophan | 0.00 | 0.04 | 0.08 | 0.11 | 0.11 | 0.11 |
| Monosodium L-glutamate | 0.00 | 0.00 | 0.00 | 0.00 | 0.56 | 1.13 |

| | | | | | | |
|---|---|---|---|---|---|---|
| (% in feed) | | | | | | |

[Table 3]

**Table 3: Formulation composition of Comp. Ex. 1 diet**

| Materials | Formulation ratio (%) |
|---|---|
| Corn | 70 |
| Soybean meal | 24 |
| Corn starch | 2 |
| Fat | 2 |
| Others | 3 |
| Total | 100 |

[Table 4]

**Table 4: Test results**

| Items | Comp. Ex. 1 | Comp. Ex. 2 | Comp. Ex. 3 | Comp. Ex. 4 | Example 1 | Example 2 |
|---|---|---|---|---|---|---|
| Amount of L-tryptophan added (%) (A) | 0 | 0.04 | 0.08 | 0.11 | 0.11 | 0.11 |
| Amount of monosodium L-glutamate added (%) (B) | 0 | 0 | 0 | 0 | 0.56 | 1.13 |
| Ratio of amino acids added (B/A) | - | - | - | - | 5 | 10 |
| Total L-tryptophan/L-lysine mass ratio in feed | 0.15 | 0.18 | 0.20 | 0.23 | 0.22 | 0.24 |
| | | | | | | |
| Average body weight when started (kg) | 11.39 | 11.39 | 11.39 | 11.39 | 11.39 | 11.39 |
| Average body weight when finished (kg) | 21.74^{a} | 22.62^{ab} | 22,03^{a} | 22.78^{abc} | 23.26^{bc} | 23.69^{c} |
| Feed intake (kg/day) (C) | 0.722 | 0.758 | 0.725 | 0.769 | 0.786 | 0.804 |
| Weight gain (kg/day) (D) | 0.370^{a} | 0.401^{abc} | 0.380^{ab} | 0.407^{bcd} | 0.424^{cd} | 0.439^{d} |
| Feed conversion ratio (C/D) | 1.956^{a} | 1.892^{abc} | 1.909^{ab} | 1.894^{abc} | 1.855^{bc} | 1.830^{c} |

| | | | | | | |
|---|---|---|---|---|---|---|
| ^{a},^{b},^{c},^{d}; Values with unlike signs have statistical difference (p < 0.05). | | | | | | |

As the results of Comparative Example 1 to 4 shown in Table 4, average body weight which was equal among the groups of the beginning of the test tended to increase along with satisfying the requirement of total L-tryptophan in the feed by the addition of L-tryptophan. And the results of Comparative Example 2 to 4 showed that final body weight reached to plateau when total amount of L-tryptophan met its requirement. And as compared to Comparative Example 4, final body weight of both Example 1 and 2 tended to increase again by the combination of monosodium L-glutamate. Also, similar tendency were observed in body weight gain, feed intake and feed conversion ratio (feed amount required for increasing 1 kg of body weight gain).

Based on the above results, by the addition of both L-tryptophan and monosodium L-glutamate to the feed, feed intake of the weaning piglets was increased, and also the improvements of feed conversion ratio and the acceleration of the growth were found. In addition, the combination use of L-tryptophan and monosodium L-glutamate was more effective than L-tryptophan was used alone.

### [Example 2]

Examination was made on the effect of adding monosodium L-glutamate alone in the feed. A total of 216 weaned and castrated male piglets (Landrace × Large White × Duroc, crossbred) were randomly allocated to six treatments with six replications using six piglets in each pen as an experimental unit in a complete block design. Comparative Example 5 to 8 and Example 3 and 4 containing the amino acids shown in Table 5 were given to each treatment group.

Comparative Example 5 was formulated as shown in Table 6 and contained 1.27 % of L-lysine without the addition of monosodium L-glutamate. For Comparative Example 6 to 8 and Example 3 and 4, Comparative Example 5 was used as the basal composition and each amino acid was added by substitution for corn starch shown in Table 6. Only monosodium L-glutamate alone was added in Comparative Example 6 and 7, and they were compared at a ratio lower than the ratio considered nutritionally optimum for piglets (0.19). In Comparative Example 8, 0.11 % of L-tryptophan was added to Comparative Example 5. In Example 3 and 4, formulations were designed in such a manner that adding amount of monosodium L-glutamate became equivalent to and 10 times of the L-tryptophan added to Comparative Example 8, respectively. In Comparative Example 8 and Examples 3 and 4, the mass ratio of total L-tryptophan/L-lysine was higher than the ratio considered nutritionally optimum for piglets (0.19).

Weaning piglets were fed these diets *ad libitum* for 28 days. By measuring body weight and the residual feed at the start and 28 days after the administration, feed intake, body weight gain and feed conversion ratio were calculated. The results are shown in Table 7.

[Table 5]

**Table 5: Added amount of amino acid in test feed**

| Amino acids | Comp. Ex. 5 | Comp. Ex. 6 | Comp. Ex. 7 | Comp. Ex. 8 | Example 3 | Example 4 |
|---|---|---|---|---|---|---|
| L-tryptophan | 0.00 | 0.00 | 0.00 | 0.11 | 0.11 | 0.11 |
| Monosodium L-glutamate | 0.00 | 0.11 | 1.13 | 0.00 | 0.11 | 1.13 |

| | | | | | | |
|---|---|---|---|---|---|---|
| (% in feed) | | | | | | |

[Table 6]

**Table 6: Formulation composition of Comp. Ex. 5 diet**

| Materials | Formulation ratio (%) |
|---|---|
| Corn | 65 |
| Soybean meal | 24 |
| Corn starch | 2 |
| Fat | 4 |
| Others | 6 |
| Total | 100 |

[Table 7]

**Table 7: Test results**

| Items | Comp. Ex. 5 | Comp. Ex. 6 | Comp. Ex. 7 | Comp. Ex. 8 | Example 3 | Example 4 |
|---|---|---|---|---|---|---|
| Amount of L-tryptophan added (%) (A) | 0 | 0 | 0 | 0.11 | 0.11 | 0.11 |
| Amount of monosodium L-glutamate added (%) (B) | 0 | 0.11 | 1.13 | 0 | 0.11 | 1.13 |
| Ratio of amino acids added (B/A) | - | - | - | - | 1 | 10 |
| Total L-tryptophan/L-lysine mass ratio in feed | 0.14 | 0.14 | 0.14 | 0.22 | 0.21 | 0.22 |
| | | | | | | |
| Average body weight when started (kg) | 10.08 | 10.08 | 10.08 | 10.08 | 10.08 | 10.08 |
| Average body weight when finished (kg) | 21.15 | 21.69 | 22.08 | 21.16 | 22.76 | 22.71 |
| Feed intake (kg/day) (C) | 0.693 | 0.717 | 0.716 | 0.667 | 0.758 | 0.723 |
| Weight gain (kg/day) | 0.395 | 0.415 | 0.429 | 0.396 | 0.453 | 0.451 |
| Feed conversion ratio (C/D) | 1.760^{a} | 1.731^{ab} | 1.670^{b} | 1.686^{b} | 1.675^{b} | 1,603^{c} |

| | | | | | | |
|---|---|---|---|---|---|---|
| ^{a,b,c}: Values with unlike signs have statistical difference (p<0.05) | | | | | | |

When monosodium L-glutamate was used in combination (Example 3 and 4) with a case of satisfying the requirement of total L-tryptophan in the feed (Comparative Example 8), body weight gain and feed intake were increased along with the increasing of monosodium L-glutamate in the feeds, and the improvement of feed conversion ratio was statistically significant. In addition, the effects for body weight gain, feed intake and feed conversion ratio shown in the piglets fed Examples 3 or 4, in which L-tryptophan and monosodium L-glutamate were used in combination, were increased in comparison with those shown in the piglets fed Comparative Example 6 or 7 which were added monosodium L-glutamate alone.

Based on the above results, the combination use of monosodium L-glutamate and L-tryptophan was more effective than using monosodium L-glutamate alone, for body weight gain, feed intake and feed conversion ratio of the weaning piglets.

### [Example 3] (for reference)

Under the same conditions of Example 1, the effect of L-glutamic acid on body weight gain, feed intake and feed conversion ratio of weaning piglets was examined. L-glutamic acid is the existing form of monosodium L-glutamate in the digestive tracts and oral cavity. A total of 216 weaned and castrated male piglets (Landrace × Large White × Duroc, crossbred) were randomly allocated to six treatments with six replications using six piglets in each pen as an experimental unit in a complete block design. Feed compositions of Comparative Example 9 to 12 and Example 5 and 6 containing the amino acids shown in Table 8 were given to each treatment group.

Comparative Example 9 was formulated as shown in Table 9 and contained 1.31 % of L-lysine without the addition of monosodium L-glutamate. For Comparative Example 10 to 12 and Example 5 and 6, Comparative Example 9 was used as the basal composition and each amino acid was added by substitution for corn starch shown in Table 9. Comparative Example 10 to 12 were prepared by the addition of L-tryptophan alone step by step to Comparative Example 9. Also, in Comparative Example 9 and 10, the ratio of total L-tryptophan/L-lysine in each feed was lower than the ratio nutritionally required by piglets (0.19). It was higher than the mass ratio nutritionally required by piglets (0.19) in Comparative Example 12.

In Example 5 and 6, formulations were designed in such a manner that adding amounts of L-glutamic acid, which was converted into monosodium L-glutamate monohydrate became 5 and 10 times of L-tryptophan, added to Comparative Example 12. Also, in Example 5 and 6, the mass ratio of total L-tryptophan/L-lysine in the feeds was higher than the mass ratio nutritionally required by piglets (0.19)

Weaning piglets were fed these diets *ad libitum* for 28 days. By measuring body weight and the residual feed at the start and 28 days after the administration, feed intake, body weight gain and feed conversion ratio were calculated. The results are shown in Table 10.

[Table 8]

**Table 8: Added amount of amino acid in test feed**

| Amino acids | Comp. Ex. 9 | Comp. Ex. 10 | Comp. Ex. 11 | Comp. Ex. 12 | Example 5* | Example 6* |
|---|---|---|---|---|---|---|
| L-tryptophan | 0.00 | 0.04 | 0.08 | 0.11 | 0.11 | 0.11 |
| L-glutamic | 0.00 | 0.00 | 0.00 | 0.00 | 0.45 | 0.90 |

| | | | | | | |
|---|---|---|---|---|---|---|
| * for reference (% in feed) | | | | | | |

[Table 9]

**Table 9: Formulation composition of Comp. Ex. 9 diet**

| Materials | Formulation ratio (%) |
|---|---|
| Corn | 65 |
| Soybean meal | 24 |
| Corn starch | 1 |
| Fat | 4 |
| Others | 6 |
| Total | 100 |

[Table 10]

**Table 10: Test results**

| Items | Comp. Ex. 9 | Comp. Ex. 10 | Comp. Ex. 11 | Comp. Ex. 12 | Example 5* | Example 6* |
|---|---|---|---|---|---|---|
| Amount of L-tryptopban added (%) (A) | 0 | 0.04 | 0.08 | 0.11 | 0.11 | 0.11 |
| Amount of L-glutamic acid added (%) | 0 | 0 | 0 | 0 | 0.45 | 0.90 |
| Amount as of monosodium L-glutamate (%) (B) | - | - | - | - | 0.56 | 1.13 |
| Ratio of amino acids added (B/A) | | | | | 5 | 10 |
| Total L-tryptophan/L-lysine mass ratio in feed | 0.14 | 0.17 | 0.19 | 0.22 | 0.22 | 0.22 |
| | | | | | | |
| Average Body weight when started (kg) | 10.13 | 10.13 | 10.13 | 10.13 | 10.13 | 10.13 |
| Average Body weight when finished (kg) | 19.87^{a} | 20.66^{b} | 21.52^{c} | 20.73^{b} | 21.98^{c} | 21.75^{c} |
| Feed intake (kg/day) (C) | 0.596^{a} | 0.623^{ab} | 0.665^{bc} | 0.610^{a} | 0.677^{c} | 0.654^{bc} |
| Weight gain (kg/day) (D) | 0.348^{a} | 0.376^{b} | 0.401^{c} | 0.379^{b} | 0.423^{c} | 0.415^{c} |
| Feed conversion ratio (C/D) | 1.716^{a} | 1.658^{ab} | 1.635^{bc} | 1.612^{bc} | 1.598^{bc} | 1.575^{c} |

| | | | | | | |
|---|---|---|---|---|---|---|
| ^{a},^{b}, ^{c},: Values with unlike signs have statistical difference (p < 0.05). * for reference | | | | | | |

As the results of Comparative Example 9 to 12, average body weight which was equal among the groups at the beginning of the test tended to increase along with satisfying the requirement of total L-tryptophan in the feed by the addition ofL-tryptophan. And the results of Comparative Example 11 and 12 showed that final body weight reached to plateau when total amount ofL-tryptophan met its requirement. And as can be seen from Example 5 and 6, final body weight tended to further increase by the addition of L-glutamic acid. Also, improvement tendency by the combination use ofL-glutamic acid was shown for body weight gain, feed intake and feed conversion ratio during the test.

Based on the above results, by the addition of both L-tryptophan and L-glutamic acid to the feed, feed intake of the weaning piglets was increased, and also improvements of feed conversion ratio and weight gain efficiency were found. In addition, the combination use ofL-tryptophan and L-glutamic acid was more effective than L-tryptophan was used alone.

### [Example 4]

Examination was made on the effect of monosodium L-glutamate in the combination with L-tryptophan which was contained in the feed in a sufficient amount for its requirement of piglet by using a feed composition practically used by a commercial farm, in which other feed materials were used in addition to corn and soybean meal. A total of 216 weaned and castrated male piglets (Landrace × Large White × Duroc, crossbred) were randomly allocated to six treatments with six replications using six piglets in each pen as an experimental unit in a complete block design. Comparative Example 13 and 14 and Example 7 to 10 containing the amino acids shown in Table 11 were given to each treatment group.

Comparative Example 13 was formulated as shown in Table 12, which is a feed composition used in a commercial farm, and contained 1.27 % of L-lysine without the addition of monosodium L-glutamate.

For Comparative Example 14 and Example 7 to 10, Comparative Example 13 was used as the basal composition and each amino acid was added by substitution for corn starch shown in Table 12. In Comparative Example 13, the mass ratio of total L-tryptophan/L-lysine was lower than the ratio nutritionally required by piglets (0.19). But in Comparative Example 14, the formulation was designed for obtaining the mass ratio (0.23) by adding L-tryptophan alone to satisfy its requirement. In Example 7 to 10, formulations were designed in such a manner that adding amount of monosodium L-glutamate became equivalent to or 5, 7.5 or 10 times larger than the amount of L-tryptophan added to Comparative Example 14, respectively, and the mass ratio of total L-tryptophan/L-lysine was higher than the mass ratio nutritionally required by piglets (0.19).

Weaning piglets were fed these diets *ad libitum* for 28 days. By measuring body weight and the residual feed at the start and 28 days after the administration, feed intake, body weight gain and feed conversion ratio were calculated. The results are shown in Table 13.

[Table 11]

**Table 11: Added amount of amino acid in test feed**

| Amino acids | Comp. Ex. 13 | Comp. Ex. 14 | Ex. 7 | Ex. 8 | Ex. 9 | Ex. 10 |
|---|---|---|---|---|---|---|
| L-tryptophan | 0.00 | 0.10 | 0.10 | 0.10 | 0.10 | 0.10 |
| Monosodium L-glutamate | 0.00 | 0.00 | 0.10 | 0.50 | 0.75 | 1.00 |

| | | | | | | |
|---|---|---|---|---|---|---|
| (% in feed) | | | | | | |

[Table 12]

**Table 12: Formulation composition of Comp. Ex. 13 diet**

| Materials | Formulation ratio (%) |
|---|---|
| Com | 36 |
| Full fat soybean | 20 |
| Broken rice | 17 |
| Soybean meal | 8 |
| Cassava | 5 |
| Fish meal | 5 |
| Fat | 3 |
| Rice bran fullfat | 2 |
| Corn starch | 1 |
| Others | 3 |
| Total | 100 |

[Table 13]

**Table 13: Test results**

| Items | Comp. Ex. 13 | Comp. Ex. 14 | Example 7 | Example 8 | Example 9 | Example 10 |
|---|---|---|---|---|---|---|
| Amount of L-tryptophan added (%) (A) | 0.00 | 0.10 | 0.10 | 0.10 | 0.10 | 0.10 |
| Amount of monosodium L-glutamate added (%) (B) | 0.00 | 0.00 | 0.10 | 0.50 | 0.75 | 1.00 |
| Ratio of amino acids added (B/A) | - | - | 1 | 5 | 75 | 10 |
| Total L-tryptophan/L-lysine mass ratio in feed | 0.17 | 0.23 | 0.23 | 0.23 | 0.23 | 0.24 |
| | | | | | | |
| Average body weight when started (kg) | 9.97 | 9.97 | 9.97 | 9.97 | 9.97 | 9.97 |
| Average body weight when finished (kg) | 21.75 | 22.28 | 22.65 | 22.51 | 22.78 | 23.11 |
| Feed intake (kg/day) (C) | 0.656 | 0.661 | 0.677 | 0.659 | 0.665 | 0.677 |
| Weight gain (kg/day) (D) | 0.421 | 0.439 | 0.453 | 0.448 | 0.458 | 0.469 |
| Feed conversion ratio (C/D) | 1.561^{a} | 1.505^{b} | 1.494^{b} | 1.472^{bc} | 1.454^{c} | 1.444^{c} |

| | | | | | | |
|---|---|---|---|---|---|---|
| ^{a},^{b},^{c}: Values with unlike signs have statistical difference (p < 0.05). | | | | | | |

As the results of Comparative Example 13 and 14, average body weight which was equal among the groups at the beginning of the test tended to increase along with satisfying the requirement of total L-tryptophan in the feed by the addition of L-tryptophan. In addition, as can be seen from Example 7 to 10, it was found that feed conversion ratio and body weight gain efficiency were increased when the adding amount of monosodium L-glutamate was increased.

Based on the above results, it was found that feed intake of the weaning piglets was increased and that improvements of feed conversion ratio and body weight gain efficiency were represented by providing a feed composition practically used by a commercial farm, in which amount of total L-tryptophan satisfied its requirement of piglets, the mass ratio of total L-tryptophan/L-lysine was equal to or higher than the ratio considered to be nutritionally optimum and monosodium L-glutamate was contained.

### Industrial Applicability

The feed composition of this invention and the livestock feed to which the feed composition is added improve the feed intake of livestock and improve body weight gain efficiency and feed conversion ratio.

## Claims

1. A feed additive for livestock, which comprises monosodium L-glutamate and L-tryptophan, wherein a mass ratio of free monosodium L-glutamate, provided that all converted into monosodium L-glutamate monohydrate, and free L-tryptophan (GLU/TRP ratio) is from 0.5 to 30.

2. The feed additive for livestock according to claim 1, wherein the GLU/TRP ratio is from 1.0 to 12.

3. The feed additive for livestock according to claim 1 or 2, wherein the livestock is a non-ruminant animal.

4. The feed additive for livestock described according to claim 3, wherein the non-ruminant animal is a pig.

5. A feed composition for livestock, which comprises L-tryptophan, monosodium L-glutamate and L-lysine, wherein a mass ratio of free monosodium L-glutamate, provided that all converted into monosodium L-glutamate monohydrate, and free L-tryptophan (GLU/TRP ratio) is from 0.5 to 30, and a mass ratio of total L-tryptophan/L-lysine is larger than 0.15.

6. The feed composition for livestock according to claim 5, wherein the GLU/TRP ratio is from 1.0 to 12.

7. The feed composition for livestock according to claim 5 or 6, wherein the livestock is a non-ruminant animal.

8. The feed composition for livestock according to claim 7, wherein the non-ruminant animal is a pig.

9. A method for producing a feed composition for livestock, which feed composition comprises a GLU/TRP ratio from 0.5 to 30, and a mass ratio of total L-tryptophan/L-lysine larger than 0.15.

10. The method for producing a feed composition for livestock according to claim 9, wherein the feed additive for livestock described in any one of claims 1 to 4 is added to feed materials.

11. A method for feeding a livestock with the feed additive for livestock described in any one of claims 1 to 4 or the feed composition for livestock feed according to claims 5 to 9.

12. The method according to claim 11, wherein the feeding is carried out for improving feed conversion ratio and body weight gain efficiency of livestock.

## Patentansprüche

1. Viehfutterzusatzstoff, der Mononatrium-L-glutamat und L-Trypthophan enthält, wobei das Massenverhältnis von freiem Mononatrium-L-glutamat unter der Annahme vollständiger Umwandlung in Mononatrium-L-glutamatmonohydrat zu freiem L-Tryptophan (GLU/TRP Verhältnis) 0,5 bis 30 ist.

2. Viehfutterzusatzstoff nach Anspruch 1, wobei das GLU/TRP-Verhältnis 1,0 bis 12 ist.

3. Viehfutterzusatzstoff nach Anspruch 1 oder 2, wobei das Vieh ein nicht widerkäuendes Tier ist.

4. Viehfutterzusatzstoff nach Anspruch 3, wobei das nicht widerkäuende Tier ein Schwein ist.

5. Viehfutterzusammensetzung, die L-Tryphtophan, Mononatrium-L-glutamat und L-Lysin enthält, wobei das Massenverhältnis von freiem Mononatrium-L-glutamat unter der Annahme vollständiger Umwandlung in Mononatrium-L-glutamatmonohydrat zu freiem L-Tryptophan (GLU/TRP-Verhältnis) 0,5 bis 30 ist und das Massenverhältnis gesamt L-Tryptophan/L-Lysin höher als 0,15 ist.

6. Viehfutterzusammensetzung nach Anspruch 5, wobei das GLU/TRP-Verhältnis 1,0 bis 12 ist.

7. Viehfutterzusammensetzung nach Anspruch 5 oder 6, wobei das Vieh ein nicht widerkäuendes Tier ist.

8. Viehfutterzusammensetzung nach Anspruch 7, wobei das nicht widerkäuende Tier ein Schwein ist.

9. Verfahren zum Herstellen einer Viehfutterzusammensetzung, welche ein GLU/TRP-Verhältnis von 0,5 bis 30 und ein Massenverhältnis gesamt L-Tryptophan/L-Lysin von höher als 0,15 aufweist.

10. Verfahren zum Herstellen einer Viehfutterzusammensetzung nach Anspruch 9, wobei der Viehfutterzusatzstoff nach einem der Ansprüche 1 bis 4 zu den Futtermaterialien gegeben wird.

11. Verfahren zum Füttern von Vieh mit dem Viehfutterzusatzstoff nach einem der Ansprüche 1 bis 4, oder der Viehfutterzusammensetzung nach einem der Ansprüche 5 bis 9.

12. Verfahren nach Anspruch 11, wobei das Füttern zum Verbessern des Futterumwandlungsverhältnisses und der Effizienz der Gewichtszunahme von Vieh durchgeführt wird.

## Revendications

1. Additif d'aliment pour bétail, qui comprend du L-glutamate de monosodium et du L-tryptophane, où un rapport en masse de L-glutamate de monosodium libre, à condition que tout soit converti en L-glutamate de monosodium monohydraté, et de L-tryptophane libre (rapport GLU/TRP) est de 0,5 à 30.

2. Additif d'aliment pour bétail selon la revendication 1, où le rapport GLU/TRP est de 1,0 à 12.

3. Additif d'aliment pour bétail selon la revendication 1 ou 2, où le bétail est un animal non ruminant.

4. Additif d'aliment pour bétail décrit selon la revendication 3, où l'animal non ruminant est un porc.

5. Composition d'aliment pour bétail qui comprend du L-tryptophane, du L-glutamate de monosodium et de la L-lysine, où un rapport en masse du L-glutamate de monosodium libre, à condition que tout soit converti en L-glutamate de monosodium monohydraté, et de L-tryptophane libre (rapport GLU/TRP) est de 0,5 à 30, et un rapport en masse de L-tryptophane total/L-lysine est supérieur à 0,15.

6. Composition d'aliment pour bétail selon la revendication 5, où le rapport GLU/TRP est de 1,0 à 12.

7. Composition d'aliment pour bétail selon la revendication 5 ou 6, où le bétail est un animal non ruminant.

8. Composition d'aliment pour bétail selon la revendication 7, où l'animal non ruminant est un porc.

9. Procédé pour produire une composition d'aliment pour bétail, laquelle composition d'aliment comprend un rapport GLU/TRP de 0,5 à 30, et un rapport en masse de L-tryptophane total/L-lysine supérieur à 0,15.

10. Procédé pour produire une composition d'aliment pour bétail selon la revendication 9, où l'additif d'aliment pour bétail décrit dans l'une quelconque des revendications 1 à 4 est ajouté à des matières d'aliment.

11. Procédé pour l'alimentation d'un bétail avec l'additif d'aliment pour bétail décrit dans l'une quelconque des revendications 1 à 4, ou la composition d'aliment pour aliment pour bétail selon les revendications 5 à 9.

12. Procédé selon la revendication 11, où l'alimentation est accomplie pour améliorer le taux de conversion d'aliment et le rendement en gain de poids corporel du bétail.
